# EUROPÄISCHE PATENTSCHRIFT

(11) **EP 3 554 898 B1**
(45) Veröffentlichungstag und Bekanntmachung des Hinweises auf die Patenterteilung: **21.04.2021**
(21) Anmeldenummer: 17801719.0
(22) Anmeldetag: 23.11.2017
(51) Int. Cl.: B60R 22/41, B60R 22/415

(54) **SICHERHEITSGURTAUFROLLER**
SEAT BELT RETRACTOR
ENROULEUR DE CEINTURE DE SÉCURITÉ

(30) Priorität: 14.12.2016 DE 102016224952
(43) Veröffentlichungstag der Anmeldung: 23.10.2019
(73) Patentinhaber: Autoliv Development AB, 447 83 Vårgårda (SE)
(72) Erfinder: BROSOWSKI, Tjark, 22419 Hamburg (DE); HUEG, Markus, 20259 Hamburg (DE); DESHPANDE, Aniruddha, 22525 Hamburg (DE)
(74) Vertreter: Müller Verweyen
(86) Internationale Anmeldenummer: PCT/EP2017/080159
(87) Internationale Veröffentlichungsnummer: WO 2018/108474

(56) Entgegenhaltungen:
- WO-A1-2008/064870
- DE-A1- 3 913 631
- DE-C1- 10 220 043

## Beschreibung

Die vorliegende Erfindung betrifft einen Sicherheitsgurtaufroller mit den Merkmalen des Oberbegriffs von Anspruch 1.

Grundsätzlich dienen Sicherheitsgurtaufroller in Fahrzeugen dazu, einen Sicherheitsgurt einer Sicherheitsgurteinrichtung eines Fahrzeuges aufzuwickeln. Dazu weist der Sicherheitsgurtaufroller eine in Aufwickelrichtung federvorgespannte Gurtwelle auf, welche in einem fahrzeugfest befestigten Rahmen drehbar gelagert ist. Außerdem weist der Sicherheitsgurtaufroller eine Blockiereinrichtung zum Blockieren der Gurtwelle in Gurtauszugsrichtung auf, welche mittels geeigneter Sensoreinrichtungen mit jeweils einer auslenkbaren Trägheitsmasse beim Überschreiten vorbestimmter Grenzwerte der Fahrzeugverzögerung oder der Gurtbandauszugsbeschleunigung angesteuert wird. Die Gurtwelle ist demnach unterhalb der Grenzwerte der Fahrzeugverzögerung und der Gurtbandauszugsbeschleunigung gegen die Federvorspannung in Abwickelrichtung drehbar und wird beim Abschnallen des Sicherheitsgurtes selbsttätig durch die Federvorspannung in Aufwickelrichtung angetrieben. Die die Fahrzeugverzögerung detektierende Sensoreinrichtung umfasst eine auslenkbare Trägheitsmasse mit einem daran anliegenden Blockierhebel, welcher bei einer Auslenkung der Trägheitsmasse seinerseits ausgelenkt wird und zur Ansteuerung der Blockiereinrichtung in eine Außenverzahnung einer drehbar an der Gurtwelle gelagerten Steuerscheibe eingreift.

Eine besondere Situation stellt das Anschnallen eines Kindersitzes auf dem Fahrzeugsitz dar. In diesem Fall soll die Gurtwelle nach einem Festsetzen des Kindersitzes auf dem Fahrzeugsitz unabhängig von dem Überschreiten der vorbestimmten Grenzwerte der Fahrzeugverzögerung oder Gurtbandauszugsbeschleunigung immer in Auszugsrichtung blockiert sein. Dazu wird das Gurtband nahezu ganz ausgezogen und bei einer vorbestimmten ersten Gurtbandauszugslänge von dem ELR-Betrieb (Emergency Locking Retractor) in den ALR-Betrieb (Automatic Locking Retractor) umgeschaltet. In dem ALR-Betrieb kann die Gurtwelle ausschließlich in Einzugsrichtung drehen, so dass der Sicherheitsgurt durch Drehen der Gurtwelle in Aufwickelrichtung soweit eingezogen werden kann, bis der Kindersitz von dem Sicherheitsgurt ohne eine Gurtlose umspannt wird, und die Gurtwelle anschließend unabhängig von den wirkenden Beschleunigungen der Fahrzeugverzögerung und des Gurtbandauszuges in Auszugsrichtung blockiert ist. Dies wird dadurch erreicht, indem die Steuerscheibe mittels eines Blockierhebels gegenüber einer Gehäusekappe in Auszugsrichtung blockiert wird, so dass die Blockiereinrichtung bei einem Gurtbandauszug automatisch angesteuert wird, und die Gurtwelle dadurch in Auszugsrichtung blockiert ist. Die beschriebene Schaltung wird im Hause der Anmelderin auch als KiSi bezeichnet.

Ein solcher Sicherheitsgurtaufroller ist zum Beispiel aus der DE 102 20 043 C1 bekannt. Zur Umschaltung des Sicherheitsgurtaufrollers von dem ELR- auf den ALR-Betrieb weist der Sicherheitsgurtaufroller ein Zählgetriebe auf, welches eine über einen Exzenterantrieb angetriebene Taumelscheibe umfasst, die sich mit einer Außenverzahnung an einer festen Innenverzahnung einer Gehäusekappe des Sicherheitsgurtaufrollers abwälzt. Ferner ist ein auf einer Lagerstelle der Gehäusekappe schwenkbar gelagerter Schalthebel vorgesehen, welcher beim Erreichen der vorbestimmten Gurtbandauszugslänge durch einen Schaltnocken zu einer Schwenkbewegung gezwungen wird und dadurch den Blockierhebel der die Fahrzeugverzögerung detektierenden Sensoreinrichtung in die Verzahnung der Steuerscheibe drängt und die Blockiereinrichtung unabhängig von der Fahrzeugverzögerung ansteuert. Die Gurtwelle ist damit unabhängig von der wirkenden Fahrzeugverzögerung oder Gurtbandauszugsbeschleunigung dauerhaft in Gurtbandauszugsrichtung blockiert und der Kindersitz ist auf dem Fahrzeugsitz festgelegt. Zur Umschaltung des Sicherheitsgurtaufrollers von dem ALR-Betrieb zurück in den ELR-Betrieb ist ein zweiter Schaltnocken vorgesehen, welcher so positioniert ist, dass der Schalthebel beim Erreichen einer zweiten Gurtbandeinzugslänge zurückgeschwenkt wird, und die Steuerscheibe dadurch wieder freigegeben wird. Die Einrichtung zur Umschaltung des Sicherheitsgurtaufrollers vom ELR-Betrieb auf den ALR-Betrieb wird nachfolgend in der weiteren Beschreibung als erste Schalteinrichtung bezeichnet.

Ein weiteres Problem ist eine sitzintegrierte Anordnung von Sicherheitsgurtaufrollern in neigungsverstellbaren Rückenlehnen, bei denen die Blockiereinrichtung bei einer Neigungsverstellung der Rückenlehne aufgrund der Auslenkung der Trägheitsmasse ungewollt angesteuert werden würde, so dass nachfolgend die Gurtwelle durch die dadurch bedingte Ansteuerung der Blockiereinrichtung in Auszugsrichtung blockiert wäre, und eine weitere Verstellung der Rückenlehne durch die blockierte Gurtwelle und den dadurch blockierten Gurtbandauszug nicht mehr möglich wäre. Zur Vermeidung dieses Problems muss die Ansteuerung der Blockiereinrichtung durch die fahrzeugsensitive Sensoreinrichtung in der Stellung des nicht angelegten Sicherheitsgurtes bewusst deaktiviert sein, damit die Neigung der Rückenlehne verstellt werden kann und insbesondere die Rückenlehne zum Einstieg der Insassen auf die hinteren Sitze nach vorne verschwenkt werden kann. Eine solche Abschaltung der fahrzeugsensitiven Sensoreinrichtung wird im Hause der Anmelderin auch als "Lock canceler" mit der Abkürzung LC bezeichnet.

Zur Lösung dieses Problems ist es aus der DE 102 20 043 C1 bekannt, einen durch das Zählgetriebe angetriebenen Schaltring mit einem Schaltnocken vorzusehen, welcher den Blockierhebel der fahrzeugsensitiven Sensoreinrichtung beim Aufwickeln des Sicherheitsgurtes ab einer vorbestimmten Gurtbandeinzugslänge in einer Nichteingriffsstellung festlegt, so dass dieser nicht mehr in die Verzahnung der Steuerscheibe einsteuern kann und die fahrzeugsensitive Sensoreinrichtung dadurch abgeschaltet ist. Die oben beschriebene Einrichtung zur Abschaltung der fahrzeugsensitiven Sensoreinrichtung wird nachfolgend in der weiteren Beschreibung als zweite Schalteinrichtung bezeichnet.

Das Zählgetriebe in der DE 102 20 043 C1 wird demnach sowohl zur Steuerung der Bewegung des Schalthebels zum Umschalten von dem ELR-Betrieb auf den ALR-Betrieb als auch zur Festlegung des Blockierhebels der fahrzeugsensitiven Sensoreinrichtung bei der vorbestimmten Gurtbandeinzugslänge genutzt, wobei die Schaltpunkte durch die individuelle Anordnung der Schaltnocken an der Taumelscheibe bzw. an der Schaltscheibe sowie durch die individuelle Ausrichtung der Taumelscheibe und Schaltscheibe zu der Gurtwelle und der Sensoreinrichtung bzw. dem Schalthebel unabhängig voneinander ausgelegt sind. Dabei ist es insbesondere erforderlich, den Sicherheitsgurtaufroller nach dem Umschalten in den ALR-Betrieb während der darauf folgenden weiteren Einzugsbewegung ab einer vorbestimmten zweiten Gurtbandeinzugslänge wieder in den ELR-Betrieb umzuschalten, also die Steuerscheibe bewusst wieder freizugeben, da die Gurtwelle bei vollständig eingezogenem Gurtband aus den oben beschriebenen Gründen bewusst nicht blockiert sein soll. Damit erfordert die Umschaltung von dem ELR- auf den ALR-Betrieb und wieder zurück zwei separate Schaltpunkte, nämlich die Umschaltung in den ALR-Betrieb zur Sicherung des Kindersitzes in der ersten Gurtbandauszugslänge und die Rückschaltung in den ELR-Betrieb in der zweiten Gurtbandeinzugslänge vor dem vollständigen Aufwickeln des Sicherheitsgurtes. Ferner ist ein dritter Schaltpunkt erforderlich, in dem der Blockierhebel der fahrzeugsensitiven Sensoreinrichtung in der Nichteingriffsstellung zur Ermöglichung der Neigungsverstellung der Rückenlehne fixiert wird. Dieser dritte Schaltpunkt ist bei einer Gurtbandeinzugslänge ausgelegt, welche kleiner als die zweite Gurtbandeinzugslänge des zweiten Schaltpunktes der ELR-ALR-Umschaltung ist, da das Abschalten der fahrzeugsensitiven Sensoreinrichtung erst dann sinnvoll ist, wenn die Steuerscheibe und damit die Gurtwelle in Auszugsrichtung frei drehen kann.

Aus der Druckschrift DE 39 13 631 A1 ist ferner ein Gurtaufroller bekannt, bei dem die Steuerscheibe mittels eines Hebels festlegbar ist, dessen Bewegung mittels eines die Dicke des Gurtwickels abtastenden Armes gesteuert wird.

Vor diesem Hintergrund liegt der Erfindung die Aufgabe zugrunde, einen Sicherheitsgurtaufroller mit einer ersten Schalteinrichtung zur Umschaltung von einem ELR-Betrieb auf einen ALR-Betrieb und einer zweiten Schalteinrichtung zur Deaktivierung der fahrzeugsensitiven Sensoreinrichtung ab einer vorbestimmten Gurtbandeinzugslänge mit einem vereinfachten konstruktiven Aufbau und einer verbesserten Gurtbandauszugs- und Gurtbandeinzugscharakteristik bereitzustellen.

Zur Lösung der Aufgabe wird ein Sicherheitsgurtaufroller mit den Merkmalen von Anspruch 1 vorgeschlagen. Weitere bevorzugte Ausführungsformen sind den Unteransprüchen, den Figuren und der zugehörigen Beschreibung zu entnehmen.

Gemäß dem Grundgedanken der Erfindung wird vorgeschlagen, dass die erste Schalteinrichtung durch einen ersten verschwenkbaren Schalthebel und die zweite Schalteinrichtung durch einen zweiten verschwenkbaren Schalthebel gebildet sind, welche aneinander anliegen. Dadurch können die erforderlichen Schaltbewegungen besonders einfach realisiert und die beiden Schalteinrichtungen besonders einfach miteinander gekoppelt werden. Durch die vorgeschlagene Lösung kann der bisher vorgesehene dritte Schaltpunkt gespart werden. Die Gurtwelle wird damit in dem Schaltpunkt der zweiten vorbestimmten Gurtbandeinzugslänge nicht nur in Drehrichtung in Auszugsrichtung wieder freigegeben, wie dies durch die erste Schalteinrichtung bei der Umschaltung vom ALR-Betrieb auf den ELR-Betrieb bewirkt wird, es wird außerdem zusätzlich durch die Schaltung der zweiten Schalteinrichtung die fahrzeugsensitive Sensoreinrichtung deaktiviert, so dass die Gurtwelle bei einer Verstellung der Neigung der Rückenlehne außerdem nicht mehr blockiert wird. Da beide Schalteinrichtungen gleichzeitig geschaltet werden, entfällt die bisher vorhandene nicht erforderliche Zwischenphase zwischen der Umschaltung des Sicherheitsgurtaufrollers vom ALR-Betrieb auf den ELR-Betrieb und der Abschaltung der fahrzeugsensitiven Sensoreinrichtung, in welcher die Gurtwelle zwar in Auszugsrichtung frei drehen kann, bei einer Auslenkung der Trägheitsmasse und Eingriff des ersten Blockierhebels in die Verzahnung der Steuerscheibe aber ungewollt blockieren kann. Dieses Blockieren der Gurtwelle kann zu unerwünschten Problemen der Handhabung führen, welche zudem störend sind, da ein Blockieren der Gurtwelle in dieser Phase des Gurtbandauszuges von keinerlei Nutzen ist, da der Sicherheitsgurt während dieser Phase aufgrund der geringen Auszugslänge keinerlei Rückhaltefunktion weder für einen Kindersitz noch für eine angeschnallte Person haben kann. Damit können die Schaltung der beiden Schalteinrichtungen und das Ausziehverhalten des Gurtbandes vereinfacht und verbessert werden. Ferner kann dadurch eine unerwünschte und im Übrigen auch nutzlose Blockierung der Gurtwelle in der Zwischenphase zwischen den bisher voneinander getrennten Schaltpunkten vermieden werden.

Eine konstruktiv besonders einfache Kopplung der beiden Schalteinrichtungen kann dabei dadurch verwirklicht werden, indem die erste Schalteinrichtung die zweite Schalteinrichtung oder umgekehrt in der zweiten vorbestimmten Gurtbandeinzugslänge betätigt. Demnach wird nur eine der beiden Schalteinrichtungen von dem Zählgetriebe betätigt, während die andere Schalteinrichtung automatisch mit betätigt wird. Die Umschaltung von dem ALR-Betrieb auf den ELR-Betrieb erfolgt damit immer in Kopplung mit der Abschaltung der fahrzeugsensitiven Sensoreinrichtung.

Weiter wird vorgeschlagen, dass der zweite Schalthebel bevorzugt einen gekrümmten Anlageabschnitt zur Anlage an dem Blockierhebel aufweist, welcher eine Festlegung des Blockierhebels in verschiedenen Drehwinkelstellungen der Sensoreinrichtung ermöglicht. Aufgrund der Vorgaben des Fahrzeugherstellers muss der Sicherheitsgurtaufroller bedingt durch die individuelle Befestigungsstelle und deren Ausrichtung in einer vorbestimmten Winkelstellung an dem Fahrzeug befestigt werden. Da die Sensoreinrichtung ihrerseits für ihre Funktionsfähigkeit in einer vorbestimmten Ausrichtung zu der Fahrzeuglängsachse und der Fahrzeugquerachse angeordnet werden muss, welche unabhängig von der Einbaulage des Sicherheitsgurtaufrollers ist, muss die Drehwinkelstellung der Sensoreinrichtung in dem Sicherheitsgurtaufroller individuell angepasst werden, um die individuelle Einbaulage des Sicherheitsgurtaufrollers zu kompensieren. Damit der Blockierhebel auch in unterschiedlichen Drehwinkelstellungen der Sensoreinrichtungen durch den zweiten Schalthebel in der Nichteingriffsstellung festlegbar ist, weist der zweite Schalthebel einen gekrümmten Anlageabschnitt auf, welcher eine Anlage des zweiten Schalthebels an dem Blockierhebel auch in verschiedenen Drehwinkelstellungen der Sensoreinrichtung und des Blockierhebels ermöglicht.

Weiter wird vorgeschlagen, dass das Zählgetriebe einen ersten Schaltnocken und einen zweiten Schaltnocken aufweist, wobei die erste Schalteinrichtung in der ersten Gurtbandauszugslänge durch den ersten Schaltnocken und die zweite Schalteinrichtung zusammen mit der ersten Schalteinrichtung in der zweiten Gurtbandeinzugslänge durch den zweiten Schaltnocken geschaltet wird.

Eine besonders kompakte und funktionssichere Ausführungsform kann dadurch verwirklicht werden, indem das Zählgetriebe durch eine sich an einer rahmenfesten Verzahnung abwälzende Taumelscheibe gebildet ist.

Weiter wird vorgeschlagen, dass an der Taumelscheibe eine Kontur vorgesehen ist, welche die Auslenkung des zweiten Schalthebels der zweiten Schalteinrichtung während der Drehbewegung der Gurtwelle bis zu der zweiten Gurtbandeinzugslänge soweit begrenzt, dass der Blockierhebel nicht in die Verzahnung der Steuerscheibe einsteuern kann. Durch die vorgeschlagene Lösung kann verhindert werden, dass die zweite Schalteinrichtung den Blockierhebel bei wirkenden Querbeschleunigungen ungewollt in der Nichteingriffsstellung durch eine unbeabsichtigte Auslenkung festlegt.

Dabei kann die Kontur bevorzugt durch eine Verzahnung gebildet sein, und der zweite Schalthebel wenigstens in einem Abschnitt eine die Taumelbewegung der Taumelscheibe kompensierende, an die Verzahnung angepasste verzahnte Formgebung aufweisen. Durch die vorgeschlagene Form der Kontur und der Formgebung des zweiten Schalthebels findet der zweite Schalthebel auch während der Taumelbewegung der Taumelscheibe ein ständiges Widerlager an der Taumelscheibe, auf dem er sich bei wirkenden Querbeschleunigungen abstützen kann, so dass er auch während der Taumelbewegung der Taumelscheibe nicht ungewollt ausgelenkt wird und den Blockierhebel dadurch nicht in der Nichteingriffsstellung festlegen kann.

Die Erfindung wird im Folgenden anhand bevorzugter Ausführungsformen unter Bezugnahme auf die beigefügten Figuren erläutert. Dabei zeigt
- Fig. 1: eine Gehäusekappe mit einer Sensoreinrichtung, einer Steuerscheibe, einem Zählgetriebe und zwei Schalteinrichtungen in Explosionsdarstellung, und

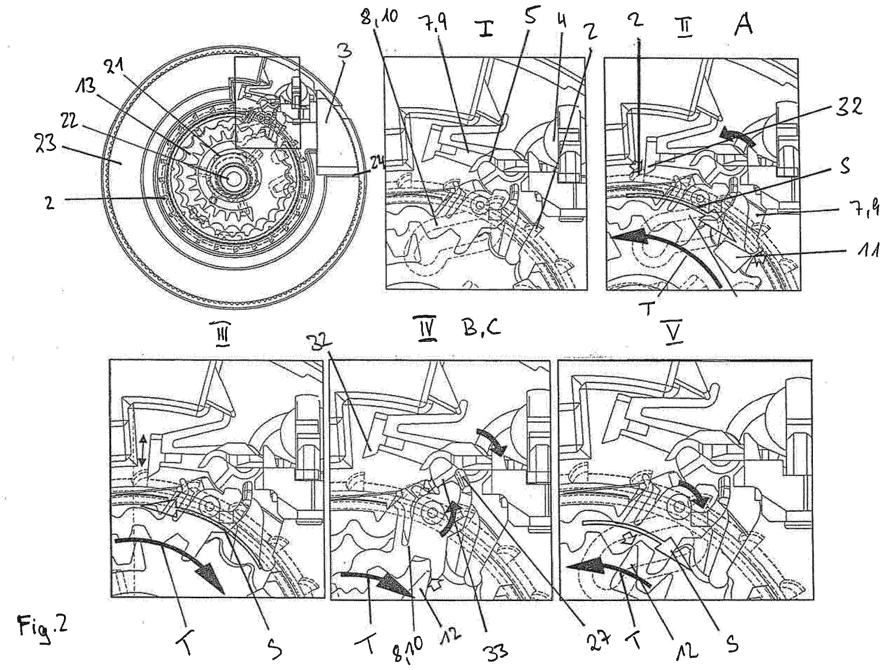

- Fig. 2: die Gehäusekappe mit der Sensoreinrichtung und den beiden Schalteinrichtungen in verschiedenen Stellungen während der Gurtbandauszugs- und der Gurtbandeinzugsbewegung.

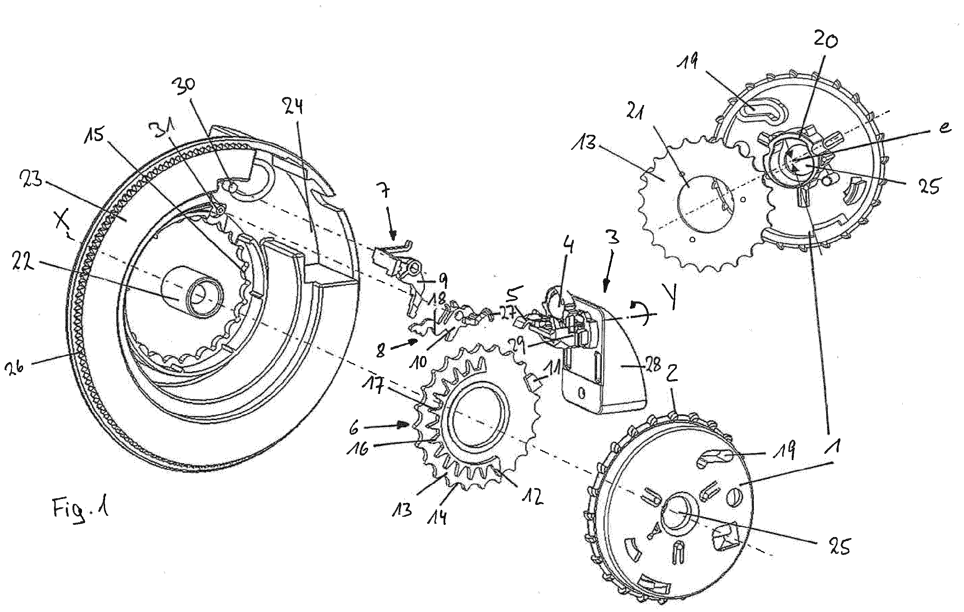

In der Figur 1 sind die erfindungswesentlichen Einzelteile in Explosionsdarstellung zu erkennen. Insbesondere ist in der Figur 1 eine Gehäusekappe 23 zu erkennen, welche an einem nicht dargestellten Rahmen eines Sicherheitsgurtaufrollers befestigt wird. Die Gehäusekappe 23 weist eine Verzahnung 26 auf, über welche die Gehäusekappe 23 in verschiedenen Drehwinkelstellungen in Bezug zu einer X-Achse an dem Rahmen befestigbar ist. Ferner ist in der Gehäusekappe 23 eine Aufnahme 24 vorgesehen, in welcher eine die Fahrzeugverzögerung detektierende Sensoreinrichtung 3 aufnehmbar ist. Außerdem ist eine nicht dargestellte, in dem Rahmen drehbar gelagerte Gurtwelle vorgesehen, auf der ein Sicherheitsgurt einer Sicherheitsgurteinrichtung aufwickelbar ist. Ferner ist an der Gurtwelle eine in Aufwickelrichtung gegenüber der Gurtwelle federbelastete Steuerscheibe 1 mit einer Verzahnung 2 und einer Steuerbohne 19 drehbar gelagert. An der nicht dargestellten Gurtwelle ist eine ebenfalls nicht dargestellte Blockierklinke gelagert, welche mit einem Führungsstift in die Steuerbohne 19 eingreift. Die Blockierklinke bildet hier eine Blockiereinrichtung, welche bei einer nachfolgend noch näher erläuterten Ansteuerung durch ein Anhalten der Steuerscheibe 1 gegenüber der Gurtwelle eine durch die Form der Steuerbohne 19 definierte Aussteuerbewegung in eine rahmenfeste Verzahnung des Sicherheitsgurtaufrollers ausführt und dadurch die Gurtwelle gegen eine weitere Gurtbandauszugsbewegung blockiert. Ferner ist ein Zählgetriebe 6 in Form einer Taumelscheibe 13 vorgesehen, dessen Funktionsweise nachfolgend noch näher beschrieben wird.

Die Steuerscheibe 1 ist mit einer Lageröffnung 25 auf einem nicht dargestellten Lageransatz eines Profilkopfes der Gurtwelle drehbar gelagert und weist selbst einen exzentrisch zu der Lageröffnung 25 angeordneten Lageransatz 20 auf, auf dem die Taumelscheibe 13 mit einer Lageröffnung 21 ihrerseits drehbar gelagert ist. Der exzentrische Versatz der Lageröffnung 25 zu dem Lageransatz 20 und die dadurch bedingte exzentrische Lagerung der Taumelscheibe 13 ist in der Figur mit "e" gekennzeichnet.

Die Sensoreinrichtung 3 weist einen Grundkörper 28 und ein in verschiedenen Drehwinkelstellungen um eine Y-Achse in dem Grundkörper 28 befestigbares Sensorgehäuse 29 auf. In dem Sensorgehäuse 29 ist eine Trägheitsmasse 4 auf einer Auflagerfläche beweglich gelagert, an der ein schwenkbeweglicher Blockierhebel 5 anliegt. Gemäß ihrer bestimmungsgemäßen Funktion wird die Trägheitsmasse 4 bei einem Überschreiten eines gesetzlich vorbestimmten Grenzwertes der Fahrzeugverzögerung ausgelenkt und verschwenkt dadurch den Blockierhebel 5 soweit, dass er in die Verzahnung 2 der Steuerscheibe 1 eingreift und diese gegenüber der Gurtwelle anhält, wodurch wiederum die Blockierklinke in die rahmenfeste Verzahnung ausgesteuert und die Gurtwelle in Auszugsrichtung blockiert wird. Dabei kann die individuelle Befestigungsausrichtung des Sicherheitsgurtaufrollers an der Fahrzeugstruktur durch eine entsprechende die individuelle Befestigung der Gehäusekappe 23 in einer bestimmten Drehwinkelstellung um die X-Achse und durch eine individuelle Anordnung des Sensorgehäuses 29 in einer bestimmten Drehwinkelstellung um die Y-Achse soweit kompensiert werden, dass das Sensorgehäuse 29 mit dem auf dem Auflager aufliegenden Trägheitsmasse 4 in einer vorbestimmten Ausrichtung zu der Fahrzeuglängsachse und der Fahrzeugquerachse zur Realisierung der vorbestimmten Ansprechschwellen ausgerichtet ist.

An der Gehäusekappe 23 sind weiter zwei Lagerstifte 30 und 31 vorgesehen, auf denen ein erster Schalthebel 9 und ein zweiter Schalthebel 10 schwenkbar gelagert sind, deren Funktion später noch beschrieben wird. Ferner weist die Gehäusekappe 23 eine Verzahnung 15 und die Taumelscheibe 13 eine korrespondierende Außenverzahnung 14 auf. An der der Steuerscheibe 1 zugewandten Seite der Taumelscheibe 13 sind ferner zwei vorstehende Schaltnocken 11 und 12 und eine seitlich vorstehende Kontur 16 in Form einer regelmäßigen, halbkreisförmigen, nach außen gerichteten Verzahnung 17 vorgesehen.

In der linken oberen Darstellung ist die Gehäusekappe 23 mit der darin angeordneten Taumelscheibe 13, der Sensoreinrichtung 3 und der angedeuteten Verzahnung 2 der nicht zu erkennenden Steuerscheibe 1 dargestellt. In den weiteren Abbildungen I bis V ist die Sensoreinrichtung 3 mit einem Ausschnitt des Zählgetriebes 6 und den beiden Schalthebeln 9 und 10 in verschiedenen Stellungen während des Gurtbandauszuges und während des darauffolgenden Gurtbandeinzuges zu erkennen. Die beiden Schalthebel 9 und 10 bilden hier eine erste Schalteinrichtung 7 und eine zweite Schalteinrichtung 8, welche wie nachfolgend noch erläutert wird, die Steuerscheibe 1 und den Blockierhebel 5 in vorbestimmten Bereichen der Gurtbandauszugslänge festlegen oder bewusst freigeben.

In der Darstellung der Abbildung 1 ist die Steuerscheibe 1 mit der angedeuteten Verzahnung 2 frei drehbar und kann damit die Drehbewegungen mit der Gurtwelle ausführen. Der Blockierhebel 5 befindet sich außer Eingriff der Verzahnung 2 und ist um seine Lagerstelle frei verschwenkbar. Übersteigt die Fahrzeugverzögerung einen vorbestimmten Grenzwert, so wird die Trägheitsmasse 4 ausgelenkt und der Blockierhebel 5 wird zur Ansteuerung der Blockiereinrichtung in die Verzahnung 2 eingesteuert. Dies ist der normale Ablauf, wenn der Insasse mit dem Sicherheitsgurt angeschnallt ist. Dieser Zustand wird auch als ELR-Betrieb bezeichnet. Zum Umschalten des Sicherheitsgurtaufrollers in den ALR-Betrieb wird der Sicherheitsgurt nahezu vollständig ausgezogen, und zwar um eine erste vorbestimmte Gurtbandauszugslänge A, welche so bemessen ist, dass sie beim normalen Anschnallen nicht erreicht wird. Dadurch wird sichergestellt, dass der Sicherheitsgurtaufroller beim normalen Anschnallen auch von sehr großen oder sehr dicken Personen oder Personen mit sehr dicker Kleidung nicht in den ALR-Betrieb umgeschaltet wird. Zur Umschaltung des Sicherheitsgurtaufrollers in den ALR-Betrieb ist an der Taumelscheibe 13 ein radial nach außen und seitlich vorstehender erster Schaltnocken 11 in Form einer in Drehrichtung der Steuerscheibe 1 in Gurtbandauszugsrichtung ansteigenden Rampe vorgesehen. Die Drehrichtung der Gurtwelle und damit auch der Steuerscheibe 1 während des Gurtbandauszuges ist in der Abbildung II mit dem Pfeil S gekennzeichnet. Aufgrund der beschriebenen exzentrischen Lagerung der Taumelscheibe 13 führt diese dabei eine durch das Abwälzen der Außenverzahnung 14 der Taumelscheibe 13 an der Verzahnung 15 der Gehäusekappe 23 erzwungene entgegengesetzte Drehbewegung in Pfeilrichtung T aus. Dabei können die Exzentrizität "e" und die Außenverzahnung 14 der Taumelscheibe 13 und die Verzahnung 15 der Gehäusekappe 23 z.B. so ausgelegt sein, dass die Taumelscheibe 13 bei jeder Umdrehung der Gurtwelle um den Drehwinkel eines Zahnabstandes gegenüber der Gehäusekappe 23 verdreht wird. Der erste Schaltnocken 11 ist derart angeordnet, dass er bei der vorbestimmten ersten Gurtbandauszugslänge A an dem einen Ende des ersten Schalthebels 9 zur Anlage gelangt. Während der weiteren Drehbewegung der Gurtwelle in Auszugsrichtung und der dadurch erzwungenen Drehbewegung der Taumelscheibe 13 wird der erste Schalthebel 9 aufgrund der Rampenform des ersten Schaltnockens 11 zu einer Schwenkbewegung gezwungen, wodurch der erste Schalthebel 9 mit seiner Spitze 32 in Eingriff mit der Verzahnung 2 der Steuerscheibe 1 gelangt und dadurch die Steuerscheibe 1 gegen eine weitere Drehbewegung in Auszugsrichtung blockiert. Die Gurtwelle ist dadurch unabhängig von der wirkenden Fahrzeugverzögerung immer in Auszugsrichtung blockiert und damit im ALR-Betrieb.

Nach dem Umschalten in den ALR-Betrieb, was akustisch auch durch ein leises Knacken wahrnehmbar ist, kann die Gurtwelle zusammen mit der Steuerscheibe 1 ausschließlich in Einzugsrichtung drehen, wobei der erste Schalthebel 9 mit seiner Spitze 32 über die Verzahnung 2 ratscht, was wiederum auch durch ein leises Ratschen wahrnehmbar ist. Das Gurtband wird jetzt durch die handhabende Person soweit eingeführt, bis der Kindersitz fest auf dem Fahrzeugsitz angeschnallt ist. Dieser Bewegungsablauf ist in der Abbildung III dargestellt.

Zum Zurückschalten des Sicherheitsgurtaufrollers in den ELR-Betrieb wird die Gurtwelle zusammen mit der Steuerscheibe 1 weiter in Einzugsrichtung des Gurtbandes gedreht, bis der zweite Schaltnocken 12 in der zweiten vorbestimmten Gurtbandeinzugslänge B an dem zweiten Schalthebel 10 zur Anlage gelangt. Diese Stellung ist in der Abbildung IV zu erkennen. Der zweite Schalthebel 10 wird dann während der weiteren Gurtbandeinzugsbewegung verschwenkt und gelangt dadurch mit einem gekrümmten Anlageabschnitt 27 an der Unterseite des Blockierhebels 5 zur Anlage, so dass der Blockierhebel 5 nachfolgend in der Nichteingriffsstellung festgelegt ist, und die Steuerscheibe 1 unabhängig von der wirkenden Fahrzeugverzögerung nicht mehr blockieren kann. Gleichzeitig gelangt der zweite Schalthebel 10 an einem Vorsprung 33 des ersten Schalthebels 9 zur Anlage, wodurch der erste Schalthebel 9 durch den zweiten Schalthebel 10 mit verschwenkt wird und mit der Spitze außer Eingriff der Verzahnung 2 der Steuerscheibe 1 gelangt. Dadurch ist der Sicherheitsgurtaufroller nachfolgend durch die erste Schalteinrichtung 7 in den ELR-Betrieb geschaltet, obwohl der Blockierhebel 5 durch die zweite Schalteinrichtung 8, gebildet durch den zweiten Schalthebel 10, in der Nichteingriffsstellung festgelegt ist. Die fahrzeugsensitive Sensoreinrichtung 3 ist damit abgeschaltet und das Gurtband kann zur Verstellung der Rückenlehne oder zum Umklappen der Rückenlehne ausgezogen werden, ohne dass die Gurtwelle blockiert werden kann. Die erste und die zweite Schalteinrichtung 7 und 8 werden demnach gleichzeitig beim Erreichen der zweiten vorbestimmten Gurtbandeinzugslänge B geschaltet, was hier konstruktiv besonders einfach dadurch gelöst ist, indem der zweite Schalthebel 10 an dem ersten Schalthebel 9 zur Anlage gelangt. Beide Schaltvorgänge werden allein durch die Anlage des zweiten Schaltnockens 12 an dem zweiten Schalthebel 10 ausgelöst. Die Deaktivierung der Sensoreinrichtung 3 und die Umschaltung aus dem ALR-Betrieb in den ELR-Betrieb erfolgen praktisch zeitgleich.

Die Stellung der Abbildung IV wird beibehalten, wenn der Sicherheitsgurt nicht angelegt ist. Wird der Sicherheitsgurt nun für einen erneuten Anschnallvorgang ausgezogen, so wird die Gurtwelle zusammen mit der Steuerscheibe 1 in Pfeilrichtung S gedreht und die Taumelscheibe 13 in Pfeilrichtung T gedreht, wie in der Abbildung V zu erkennen ist. Während dieser Drehbewegung gelangt der zweite Schaltnocken 12 wiederum zur Anlage an dem zweiten Schalthebel 10 und zwingt den zweiten Schalthebel 10 anschließend zu einer rückwärts gerichteten Schwenkbewegung, während der der gekrümmte Abschnitt 27 des zweiten Schalthebels 10 von dem Blockierhebel 5 weg geschwenkt wird und den Blockierhebel 5 dadurch freigibt. Die beiden Schalthebel 9 und 10 bzw. die erste Schalteinrichtung 7 und die zweite Schalteinrichtung 8 nehmen dadurch wieder die in der Abbildung 1 gezeigte Stellung ein.

Damit der zweite Schalthebel 10 während der darauffolgenden Gurtbandauszugsbewegung bzw. während des Normalgebrauchs des Sicherheitsgurtes nicht durch wirkende Querbeschleunigungen ungewollt ausgelenkt und die Sensoreinrichtung 3 dadurch ungewollt deaktiviert wird, ist an der Taumelscheibe 13 eine seitlich vorstehende Kontur 16 in Form einer halbkreisförmigen, nach außen gerichteten Verzahnung 17 vorgesehen, welche während der Taumelbewegung der Taumelscheibe 13 durch einen verzahnten Abschnitt 18 des zweiten Schalthebels 10 geführt wird. Die Kontur 16 bildet damit ein Widerlager, an dem sich der zweite Schalthebel 10 in jeder Phase der Drehbewegung abstützt. Die Zähne der Verzahnung 17 der Kontur 16 weisen bevorzugt einen identischen Winkelabstand wie die Zähne der Außenverzahnung 14 der Taumelscheibe 13 auf. Ferner weist der Abschnitt 18 an dem zweiten Schalthebel 10 eine korrespondierende Formgebung auf, so dass die Zähne der Verzahnung 17 darin während der Taumelbewegung eintauchen können, ohne den zweiten Schalthebel 10 zu bewegen.

Ferner ist der gekrümmte Anlageabschnitt 27 des zweiten Schalthebels 10 so geformt, dass der Krümmungsmittelpunkt des Anlageabschnittes 27 in der an dem Blockierhebel 5 anliegenden Stellung in etwa in der Y-Achse liegt. Dadurch kann die Funktion der Sensorabschaltung für verschiedene Drehwinkelstellungen des Sensorgehäuses 29 um die Y-Achse gegenüber dem Grundkörper 28 ermöglicht werden, ohne dass dazu der zweite Schalthebel 10 angepasst werden müsste.

## Patentansprüche

1. Sicherheitsgurtaufroller mit
- einer in einem Rahmen drehbar gelagerten Gurtwelle zum Aufwickeln eines Sicherheitsgurtes, und
- einer Blockiereinrichtung zum Blockieren der Gurtwelle in Abwickelrichtung, und
- einer drehbar an der Gurtwelle gelagerten, in Aufwickelrichtung federbelasteten Steuerscheibe (1) mit einer Verzahnung (2), und
- einer Sensoreinrichtung (3) mit einer auslenkbaren Trägheitsmasse (4) und einem durch die Auslenkung der Trägheitsmasse (4) auslenkbaren Blockierhebel (5), welche
- die Steuerscheibe (1) bei einem Überschreiten einer vorbestimmten Fahrzeugverzögerung durch Auslenkung der Trägheitsmasse (4) und einem dadurch erzwungenen Eingriff des Blockierhebels (5) in die Verzahnung (2) der Steuerscheibe (1) gegenüber der Gurtwelle in Gurtauszugsrichtung blockiert und dadurch die Blockiereinrichtung ansteuert, und
- einem von der Drehbewegung der Gurtwelle angetriebenen Zählgetriebe (6), und
- einer ersten von dem Zählgetriebe (6) betätigten Schalteinrichtung (7), welche die Steuerscheibe (1) ab einer ersten vorbestimmten Gurtbandauszugslänge (A) in Gurtauszugsrichtung blockiert und ab einer zweiten vorbestimmten Gurtbandeinzugslänge (B) wieder freigibt, und
- einer zweiten von dem Zählgetriebe (6) betätigten Schalteinrichtung (8), welche den Blockierhebel (5) ab einer vorbestimmten Gurtbandeinzugslänge (C) in einer Nichteingriffsstellung in die Verzahnung (2) der Steuerscheibe (1) festlegt, wobei
- sowohl die erste Schalteinrichtung (7) als auch die zweite Schalteinrichtung (8) während der Gurtbandeinzugsbewegung in der zweiten vorbestimmten Gurtbandeinzugslänge (B) betätigt werden,
**dadurch gekennzeichnet, dass**
- die erste Schalteinrichtung (7) durch einen ersten verschwenkbaren Schalthebel (9) und die zweite Schalteinrichtung (8) durch einen zweiten verschwenkbaren Schalthebel (10) gebildet sind, wobei
- der zweite Schalthebel (10) an dem ersten Schalthebel (9) anliegt.

2. Sicherheitsgurtaufroller nach Anspruch 1, **dadurch gekennzeichnet, dass**
- die erste Schalteinrichtung (7) die zweite Schalteinrichtung (8) oder umgekehrt in der zweiten vorbestimmten Gurtbandeinzugslänge (B) betätigt.

3. Sicherheitsgurtaufroller nach einem der Ansprüche 1 oder 2, **dadurch gekennzeichnet, dass**
- der zweite Schalthebel (10) einen gekrümmten Anlageabschnitt (27) zur Anlage an dem Blockierhebel (5) aufweist, welcher eine Festlegung des Blockierhebels (5) in verschiedenen Drehwinkelstellungen der Sensoreinrichtung (3) ermöglicht.

4. Sicherheitsgurtaufroller nach einem der vorangegangenen Ansprüche, **dadurch gekennzeichnet, dass**
- das Zählgetriebe (6) einen ersten Schaltnocken (11) und einen zweiten Schaltnocken (12) aufweist, wobei die erste Schalteinrichtung (7) in der ersten Gurtbandauszugslänge (A) durch den ersten Schaltnocken (11) und die zweite Schalteinrichtung (8) zusammen mit der ersten Schalteinrichtung (7) in der zweiten Gurtbandeinzugslänge (B) durch den zweiten Schaltnocken (12) geschaltet werden.

5. Sicherheitsgurtaufroller nach einem der vorangegangenen Ansprüche, **dadurch gekennzeichnet, dass**
- das Zählgetriebe (6) durch eine sich an einer rahmenfesten Verzahnung (15) abwälzenden Taumelscheibe (13) gebildet ist.

6. Sicherheitsgurtaufroller nach Anspruch 5 und nach einem der Ansprüche 1 bis 4, **dadurch gekennzeichnet, dass**
- an der Taumelscheibe (13) eine Kontur (16) vorgesehen ist, welche die Auslenkung des zweiten Schalthebels (10) der zweiten Schalteinrichtung (8) während der Drehbewegung der Gurtwelle bis zu der zweiten Gurtbandeinzugslänge (B) soweit begrenzt, dass der Blockierhebel (5) nicht in die Verzahnung (2) der Steuerscheibe (1) einsteuern kann.

7. Sicherheitsgurtaufroller nach Anspruch 6, **dadurch gekennzeichnet, dass**
- die Kontur (16) durch eine Verzahnung (17) gebildet ist, und
- der zweite Schalthebel (10) wenigstens in einem Abschnitt (18) eine die Taumelbewegung der Taumelscheibe (13) kompensierende, an die Kontur (16) der Verzahnung (17) angepasste, verzahnte Formgebung aufweist.

## Claims

1. Seat belt retractor comprising
- a belt shaft rotatably mounted in a frame for winding up a seat belt, and
- a blocking device for blocking the belt shaft in the unwinding direction, and
- a control disk (1) having a toothing (2), which disk is rotatably mounted on the belt shaft and is spring-loaded in the winding direction, and
- a sensor device (3) having a deflectable inertial mass (4) and a blocking lever (5) which can be deflected by the deflection of the inertial mass (4), which device
- blocks the control disk (1) with respect to the belt shaft in the belt extension direction when a predetermined vehicle deceleration is exceeded due to the deflection of the inertial mass (4) and the blocking lever (5) consequently engages in the toothing (2) of the control disk (1), and thereby controls the blocking device, and
- a counter gear (6) driven by the rotational movement of the belt shaft, and
- a first switching device (7) actuated by the counter gear (6), which device blocks the control disk (1) from afirst predetermined belt extension length (A) in the belt extension direction and releases it again from a second predetermined belt retraction length (B), and
- a second switching device (8) actuated by the counter gear (6), which device fixes the blocking lever (5) in a non-engagement position in the toothing (2) of the control disk (1) from a predetermined belt retraction length (C),
- both the first switching device (7) and the second switching device (8) being actuated during the belt retraction movement in the second predetermined belt retraction length (B),
**characterized in that**
- the first switching device (7) is formed by a first pivotable switching lever (9) and the second switching device (8) is formed by a second pivotable switching lever (10),
- the second switching lever (10) resting against the first switching lever (9).

2. Seat belt retractor according to claim 1, **characterized in that**
- the first switching device (7) actuates the second switching device (8) or vice versa in the second predetermined belt retraction length (B).

3. Seat belt retractor according to either claim 1 or claim 2, **characterized in that**
- the second switching lever (10) has a curved contact portion (27) for contact with the blocking lever (5), which portion allows the blocking lever (5) to be fixed in various rotation angle positions of the sensor device (3).

4. Seat belt retractor according to any of the preceding claims, **characterized in that**
- the counter gear (6) has a first switching cam (11) and a second switching cam (12), the first switching device (7) being switched in the first belt extension length (A) by the first switching cam (11) and the second switching device (8) being switched together with the first switching device (7) in the second belt retraction length (B) by the second switching cam (12).

5. Seat belt retractor according to any of the preceding claims, **characterized in that**
- the counter gear (6) is formed by a swash plate (13) rolling on a toothing fixed to the frame (15).

6. Seat belt retractor according to claim 5 and according to any of claims 1 to 4, **characterized in that**
- a contour (16) is provided on the swash plate (13), which contour limits the deflection of the second switching lever (10) of the second switching device (8) during the rotational movement of the belt shaft up to the second belt retraction length (B) such that the blocking lever (5) cannot engage in the toothing (2) of the control disk (1).

7. Seat belt retractor according to claim 6, **characterized in that**
- the contour (16) is formed by atoothing (17), and
- the second switching lever (10) has, at least in one portion (18), a toothed shape that compensates for the wobbling of the swash plate (13) and is adapted to the contour (16) of the toothing (17).

## Revendications

1. Enrouleur de ceinture de sécurité comportant
- un axe de ceinture monté de manière rotative dans un cadre pour enrouler une ceinture de sécurité, et
- un dispositif de blocage destiné à bloquer l'axe de ceinture dans la direction de déroulement, et
- un disque de commande (1) comportant une denture (2), lequel est monté de manière rotative sur l'axe de ceinture et est chargé par ressort dans la direction d'enroulement, et
- un dispositif de détection (3) comportant une masse d'inertie (4) pouvant être déviée et un levier de blocage (5) pouvant être dévié à la suite de la déviation de la masse d'inertie (4), lequel dispositif de détection
- bloque le disque de commande (1) lorsqu'une décélération prédéfinie du véhicule est dépassée, à la suite de la déviation de la masse d'inertie (4), et bloque une mise en prise ainsi forcée du levier de blocage (5) dans ladenture (2) du disque de commande (1) par rapport à l'axe de ceinture dans la direction d'extension de ceinture, et commande ainsi le dispositif de blocage, et
- un engrenage compteur (6) entraîné par le mouvement de rotation de l'axe de ceinture, et
- un premier dispositif de commutation (7) actionné par l'engrenage compteur (6), lequel premier dispositif de commutation bloque le disque de commande (1) à partir d'une première longueur d'extension prédéfinie de sangle de ceinture (A) dans la direction d'extension de ceinture et le libère à nouveau à partir d'une seconde longueur de rétraction prédéfinie de sangle de ceinture (B), et
- un second dispositif de commutation (8) actionné par l'engrenage compteur (6), lequel second dispositif de commutation fixe le levier de blocage (5) dans une position de non-mise en prise dans la denture (2) du disque de commande (1) à partir d'une longueur de rétraction prédéfinie de sangle de ceinture (C),
- aussi bien le premier dispositif de commutation (7) que le second dispositif de commutation (8) étant actionnés pendant le mouvement de rétraction de sangle de ceinture dans la seconde longueur de rétraction prédéfinie de sangle de ceinture (B), **caractérisé en ce que**
- le premier dispositif de commutation (7) est formé par un premier levier de commutation pivotant (9) et le second dispositif de commutation (8) est formé par un second levier de commutation pivotant (10),
- le second levier de commutation (10) reposant contre le premier levierde commutation (9).

2. Enrouleur de ceinture de sécurité selon la revendication 1, **caractérisé en ce que**
- le premier dispositif de commutation (7) actionne le second dispositif de commutation (8) ou inversement dans la seconde longueur de rétraction prédéfinie de sangle de ceinture (B).

3. Enrouleur de ceinture de sécurité selon l'une des revendications 1 ou 2, **caractérisé en ce que**
- le second levier de commutation (10) présente une section de contact courbe (27) pour le contact avec le levier de blocage (5), laquelle section de contact courbe permet de fixer le levier de blocage (5) dans différentes positions angulaires de rotation du dispositif de détection (3).

4. Enrouleur de ceinture de sécurité selon l'une des revendications précédentes, **caractérisé en ce que**
- l'engrenage compteur (6) présente une première came de commutation (11) et une seconde came de commutation (12), le premier dispositif de commutation (7) pouvant être commuté dans la première longueur d'extension de sangle de ceinture (A) par la première came de commutation (11) et le second dispositif de commutation (8) pouvant être commuté conjointement avec le premier dispositif de commutation (7) dans la seconde longueur de rétraction de sangle de ceinture (B) par la seconde came de commutation (12).

5. Enrouleur de ceinture de sécurité selon l'une des revendications précédentes, **caractérisé en ce que**
- l'engrenage compteur (6) est formé par un disque oscillant (13) roulant sur une denture (15) fixée au cadre.

6. Enrouleur de ceinture de sécurité selon la revendication 5 et selon l'une des revendications 1 à 4, **caractérisé en ce**
- **qu'**un contour (16) est prévu sur le disque oscillant (13), lequel contour limite la déviation du second levier de commutation (10) du second dispositif de commutation (8) pendant le mouvement de rotation de l'axe de ceinture jusqu'à la seconde longueur de rétraction de sangle de ceinture (B), de telle sorte que le levier de blocage (5) ne peut pas s'insérer dans la denture (2) du disque de commande (1).

7. Enrouleur de ceinture de sécurité selon la revendication 6, **caractérisé en ce que**
- le contour (16) est formé par une denture (17), et
- le second levier de commutation (10) présente, au moins dans une section (18), une forme dentée qui compense le mouvement d'oscillation du disque oscillant (13) et qui est adaptée au contour (16) de ladenture (17).
